# EUROPEAN PATENT APPLICATION

(11) **EP 4 379 369 A1**
(43) Date of publication of application: **05.06.2024**
(21) Application number: 22210690.8
(22) Date of filing: 30.11.2022
(51) Int. Cl.: G01N 30/08, G01N 1/40

(54) **SAMPLING DEVICE FOR SAMPLING AND CONCENTRATING TRACE COMPOUNDS FROM AN AIR SAMPLE**

(71) Applicant: Koninklijke Philips N.V., 5656 AG Eindhoven (NL)
(72) Inventor: BOER, Leander, 5656AG Eindhoven (NL)
(74) Representative: Philips Intellectual Property & Standards

(57) **Abstract**

The invention relates to a sampling device 2 for sampling and concentrating trace compounds from an air sample A and a respective gas chromatography system and method. The sampling device 2 comprises a downstream desorption stage 6 as well as at least one additional desorption stage 18. It has been found that the detection limit of a gas chromatography system can be increased by sampling high volumes of air and concentrating the air sample obtained in a stepwise approach by utilizing the desorption stages 6, 18 to a concentration that exceeds the detection limit of the gas chromatography system. Thus, detection of lower concentrations of compounds in an air sample A can be achieved.

## Description

### FIELD OF THE INVENTION

The invention relates to a sampling device, gas chromatography system and method for sampling, concentrating and analyzing compounds in an air sample.

### BACKGROUND OF THE INVENTION

A gas chromatography instrument is a well-known instrument for detecting and determining a concentration of gas compounds such as trace compounds from an air sample. It consists of a chromatographic column that has the ability to separate a mixture of gases into individual components, and a detector that outputs a signal depending on the concentration and/or type of gas that passes through it.

Detectors of such instruments require a specific minimum concentration of the compounds to provide measurable results. In order to improve the concentration of trace compounds, it is known to utilize sampling devices that comprise a sorbent bed in order to collect the sample to the sorbent bed. After collecting the sample, the sorbent bed can be thermally desorbed to form a desorbed sample that includes a higher trace component concentration and that is provided to the chromatographic column.

To rapidly inject the sample, the sorbent bed must exhibit a low thermal mass, so that the sorbent can be heated rapidly to release the trace compounds. For this reason, the sorbent bed is typically constructed as a small diameter tube filled with sorbent particles. The amount of air which can practically be passed through such a small diameter tube is restricted. Therefore, such systems are limited to low sampling volumes and/or require high sampling times.

Ambient air contains various trace compounds at low concentrations in the order of parts per trillion. These low concentrations are difficult to detect with conventional gas chromatographic systems. Thus, conventional gas chromatography systems cannot be used in a satisfying way for applications utilizing ambient air samples such as human health monitoring, green house, or pollutant analysis.

### SUMMARY OF THE INVENTION

It is an object of the present invention to provide a sampling device, gas chromatography system and method for providing an improved sampling and concentration of trace compounds in an air sample.

In a first aspect, a sampling device for sampling and concentrating trace compounds from an air sample is presented. The sampling device comprises an air sample inlet for receiving an air sample comprising trace compounds and a downstream desorption stage comprising a downstream stage inlet, a downstream stage outlet, a downstream stage sorbent bed and a downstream stage valve arrangement, wherein the downstream valve arrangement is configured to alternatively connect the downstream sorbent bed to the downstream stage inlet or to the downstream stage outlet and a carrier gas source. The sampling device further comprises an upstream desorption stage comprising an upstream stage inlet, an upstream stage outlet, an upstream stage sorbent bed and an upstream stage valve arrangement, wherein the upstream stage valve arrangement is configured to alternatively connect the upstream stage sorbent bed to the upstream stage inlet or to the upstream stage outlet and a carrier gas source. The upstream stage inlet is connected to the air sample inlet and the upstream stage outlet is connected to the downstream stage inlet.

It has been found that by sampling high volumes of air and concentrating the air sample obtained in a stepwise approach, trace compounds having a low concentration in a provided air sample can be detected. In other words, the detection limit of a corresponding gas chromatography system comprising said sampling device can be increased. With the proposed sampling device, trace compounds having a low concentration can be detected without breakthrough, in a limited time frame and with high temporal resolution as well as with a high-quality detection signal. Thus, detection of lower concentrations of compounds in an air sample can be achieved than was previously possible. By allowing higher volumes of air to be sampled taking air samples close to the source of emission is no longer essential. The reduction in concentration caused by dilution is compensated by an increase in sampling volume resulting in a similar sample mass collected.

In a preferred embodiment, the upstream desorption stage of the sampling device comprises a transportation device configured to provide the air sample from the air sample inlet to the upstream stage sorbent bed. With the help of said transportation device, which can be a pump or a fan, the air sample is provided conveniently to the upstream stage sorbent bed with the required high volumes. The sampling device preferentially further comprises at least one intermediate desorption stage comprising an intermediate stage inlet, an intermediate stage outlet, an intermediate stage sorbent bed and an intermediate stage valve arrangement, wherein the intermediate stage valve arrangement is configured to alternatively connect the intermediate stage sorbent bed to the intermediate stage inlet or to the intermediate stage outlet and the gas carrier source, wherein the intermediate stage is arranged in between the upstream stage and the downstream stage, wherein the intermediate stage inlet is connected to the upstream stage outlet and the intermediate stage outlet is connected to the downstream stage inlet. With the help of said intermediate stage, the concentration of trace compounds can be increased even further by utilizing an intermediate sorbent bed arranged in between the upstream and downstream sorbent beds. By adding another concentration step, a detection limit of a gas chromatography system can be further increased.

The upstream stage sorbent can comprise a sorbent having a mass of 50 grams - 150 grams, in particular 100 grams, and/or wherein the intermediate stage sorbent bed comprises a sorbent having a mass of 0.5 grams - 1.5 grams, in particular 1 gram and/or wherein the downstream stage sorbent bed comprises a sorbent having a mass of 50 milligrams - 150 milligrams, in particular 100 milligrams. By providing the sorbent beds with different masses starting with a high mass on the upstream side and a lower mass on the downstream side, the stepwise increase of concentration of the trace compounds is achieved. For example, an air sample of 1 m³ of ambient air with a targeted trace compound concentration of 1 part per trillion by volume is collected onto the upstream sorbent bed. Next, the sample is thermally desorbed from the upstream sorbent bed onto the intermediate stage sorbent bed, effectively increasing the concentration of the trace compounds by a factor of about 1000 to 1 part per billion by volume. This step is repeated once more for the intermediate stage sorbent bed, after which the downstream stage sorbent bed receives a sample with a concentration of 1 part per million by volume in the presented example.

In a preferred embodiment, at least one of the valves, in particular all valves, are configured as 6-port switching valves. The downstream desorption stage can comprise a transportation device connected to the air sample inlet and the downstream stage sorbent bed, wherein the transportation device can be further configured to provide the air sample from the air sample inlet to the downstream stage sorbent bed. Further, the intermediate desorption stage can comprise a transportation device connected to the air sample inlet and the intermediate stage sorbent bed, wherein the transportation device is configured to provide the air sample from the air sample inlet to the intermediate stage sorbent bed. It has been found that when the concentration of the trace compounds is high, there may be no need to use all three stages of the sampling device. By fitting all three stages with a transportation device, such as a pump or a fan, the sampling can start at any desired stage allowing a flexibility in operation and a high dynamic range.

At least one of the stages can comprise an additional sorbent bed, wherein the additional sorbent bed comprises a sorbent that differs from the sorbent of the sorbent bed of the stage, in particular with regard to affinities for certain compounds. In particular, the upstream desorption stage can comprise the additional sorbent bed. Further, the sorbent bed of the respective stage and the additional sorbent bed can be connected in series. When trace compounds of interest have a concentration in the parts per billion or parts per trillion range, it may happen that other compounds are present in the sample that have similar or higher concentrations. These other components may form background noise that hinders detection of the trace compound of interest. In order to address this issue, some degree of separation between compounds can be achieved already in the upstream desorption stage. The sorbent beds can contain different sorbents with different affinities for certain compounds, such as polar versus a-polar, hydrophobic versus hydrophilic, low temperature versus high temperature.

The sorbent beds of the respective stage can be thermally decoupled such that they can be desorbed onto a subsequent stage independently and one after another. It has been found that with the proposed design, an ability is provided to filter out compounds present in the background, based on their relative affinity for the sorbent.

In a preferred embodiment, the upstream stage sorbent bed comprises at least one of the following: stainless steel tube, Poly(2,6-diphenyl-p-phenylene oxide) sorbent material, two valves configured to open and close an access to the upstream, heating device, in particular heating wire wound on the outside of the sorbent bed. Alternative sorbent materials can be, for example, Carboxen, Hayesep or Carbograph.

The above design has been found to be beneficial for the design of the upstream stage sorbent bed, which is the sorbent bed affected with the highest volume. The upstream stage high-volume sorbent bed can be made from stainless steel vacuum components. The high volume sorbent bed can consist of a 50 mm diameter stainless steel tube. The upstream stage sorbent bed can be opened and closed by two air-pressure operated valves. The valves can be baked out in vacuum to clean them of any adsorbed volatiles prior to use. The sorbent bed can be heated by a heating wire. The heating wire can be wound around the outside of the sorbent bed. The bed can be purged with helium via two swagelok connectors.

In a preferred embodiment, at least one of the transportation devices is arranged downstream of the sorbent bed of the respective stage. Thus, air is sucked through the upstream stage sorbent bed. This configuration prevents contamination of the sorbent bed by outgasing of the transportation device. If flow would be blown through the bed by the transportation device such as a fan or a pump, there is a risk that internals of the pump or fan will outgas and contaminate the sorbent bed. The transportation device can comprise a fan, wherein the fan is configured to provide a volume flow of at least 0.5 m³ per hour, prefereably 1 m³ per hour, which applies in particular to the transportation device of the upstream desorption stage. The sampling rate that can be achieved with the fan having the mentioned configuration is factor 100 to 1000 larger than in conventional sampling systems, allowing the capture and detection of low concentrations of volatile compounds up to parts per trillion level.
In another aspect of the present invention, a gas chromatography system for analyzing compounds in an air sample is presented. The system comprises a sampling device as defined by any of claims 1 to 12, a chromatographic column connected to the downstream stage outlet of the sampling device, and a detector connected to the chromatographic column.

It has been found that with the above configuration, low concentrations of trance compounds in the parts per trillion level can be achieved. Further, it has been found that high retention of volatile compounds is achieved with limited sampling time. Further, a high temporal resolution can be provided as well as sharp peaks in the gas chromatogram. Further, the system can handle air samples that are humid and/or contain contaminants by means of drying steps and through selective desorption of analytes.

In a further aspect of the present invention, a method for sampling and concentrating trace compounds in an air sample is presented. The method is in particular conducted by means of a sampling device according to claims 1 to 12. The method comprises the step of providing an air sample comprising trace compounds to an upstream stage sorbent bed, collecting the sample to the upstream stage sorbent bed, thermally desorbing the upstream stage sorbent bed to form a desorbed sample and providing the desorbed sample to a downstream stage sorbent bed, collecting the desorbed sample onto the downstream stage sorbent bed, thermally desorbing the downstream sorbent bed to form a second desorbed sample. The desorbed sample from the upstream stage sorbent bed can be provided to at least one intermediate stage sorbent bed, wherein the method further comprises collecting the sample onto the intermediate stage sorbent bed and thermally desorbing the intermediate stage sorbent bed to form an intermediate desorbed sample and providing the intermediate desorbed sample to the downstream stage sorbent bed.

It shall be understood that the sampling device of claims 1 to 12, the gas chromatography system of claim 13 and the method for sampling and concentrating trace compounds in an air sample of claim 14 have similar and/or identical preferred embodiments, in particular, as defined in the dependent claims.

It shall be understood that a preferred embodiment of the present invention can also be any combination of the dependent claims or above embodiments with the respective independent claim. These and other aspects of the invention will be apparent from and elucidated with reference to the embodiments described hereinafter.

### BRIEF DESCRIPTION OF THE DRAWINGS

In the following drawings:
Fig. 1 shows schematically and exemplarily an embodiment of a gas chromatography system for analyzing compounds in an air sample,
Fig. 2 shows schematically and exemplarily an alternative embodiment of a gas chromatography system for analyzing compounds in an air sample,
Fig. 3 illustrates a further embodiment of a gas chromatography system in an alternative configuration,
Fig. 4 shows schematically and exemplarily an embodiment of an upstream high volume sorbent bed in a perspective view,
Fig. 5 shows schematically and exemplarily the embodiment of Fig. 4 in an alternative view,
Fig. 6 shows sample chromatograms obtained with the gas chromatography system according to the invention,
Fig. 7 illustrates a method for sampling and concentrating trace compounds in an air sample.

### DETAILED DESCRIPTION OF THE EMBODIMENTS

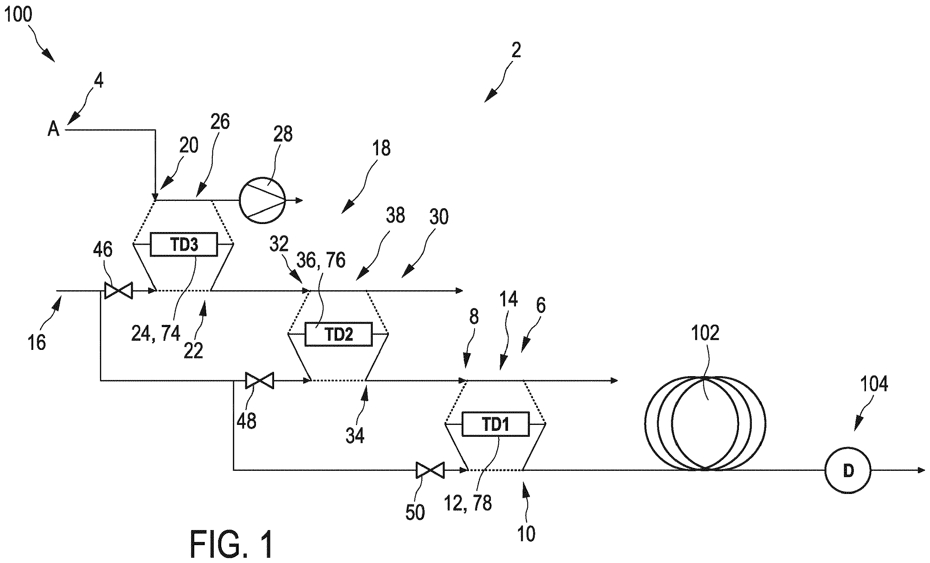

Fig. 1 shows a first embodiment of a gas chromatography system 100 for analyzing compounds in an air sample A. The system 100 comprises a sampling device 2 and a chromatography column 102 connected to a downstream stage outlet 10 of the sampling device 2. The gas chromatography system further comprises a detector 104 connected to the chromatographic column 102.

The sampling device 2 according to the embodiment of Fig. 1 comprises an air sample inlet for receiving an air sample A comprising trace compounds. The sampling device 2 furthermore comprises a downstream desorption stage 6 comprising a downstream stage inlet 8, a downstream stage outlet 10, a downstream stage sorbent bed 12 and a downstream stage valve arrangement 14, wherein the downstream stage valve arrangement 14 is configured to alternatively connect the downstream stage sorbent bed 12 to the downstream stage inlet 8 or to the downstream stage outlet 10 and a carrier gas source 16.

The sampling device 2 furthermore comprises an upstream desorption stage 18. The upstream desorption stage 18 comprises an upstream stage inlet 20, an upstream stage outlet 22, an upstream stage sorbent bed 24 and an upstream stage valve arrangement 26, wherein the upstream stage valve arrangement 26 is configured to alternatively connect the upstream stage sorbent bed 24 to the upstream stage inlet 20 or the upstream stage outlet 22 and a carrier gas source 16. The sampling device 2 further comprises an intermediate desorption stage 30. The intermediate desorption stage 30 comprises an intermediate stage inlet 32, an intermediate stage outlet 34, an intermediate stage sorbent bed 36 and an intermediate stage valve arrangement 38. The intermediate stage valve arrangement 38 is configured to alternatively connect the intermediate stage sorbent bed 36 to the intermediate stage inlet 32 or to the intermediate stage outlet 34 and the carrier gas source 16. The intermediate stage 30 is arranged in between the upstream stage 18 and the downstream stage 6. The intermediate stage inlet 32 is connected to the upstream stage outlet 22. The intermediate stage outlet 34 is connected to the downstream stage inlet 8. Further, the upstream stage inlet 20 is connected to the air sample inlet 4.

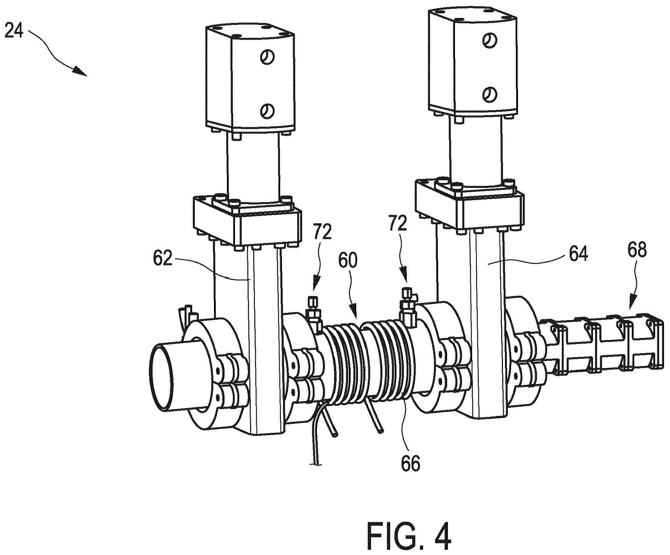

The upstream desorption stage 18 furthermore comprises a transportation device 28 which is configured to provide the air sample A from the air sample inlet 4 to the upstream stage sorbent bed 24. The transportation device 28 is configured as a fan 68 as shown in Fig. 4. The transportation device 28 is arranged downstream of the upstream stage sorbent bed 24. In this way, air is sucked through the upstream stage sorbent bed 24. Arranging the transportation device 28 downstream of the upstream stage sorbent bed 24 prevents contamination of the upstream stage sorbent bed 24 by outgassing. If a flow would be blown through the sorbent bed 24 by means of the transportation device 28, there is a risk that internals of the transportation device 28 will outgas and contaminate the sorbent bed 24. The sorbent beds 12, 24, 36 comprise sorbents 74, 76, 78 that each have different masses. In particular, the sorbent 74 of the upstream stage sorbent bed has a mass of 100 grams, the sorbent 76 of the intermediate stage sorbent bed 36 has a mass of 1 gram and the sorbent 78 of the downstream stage sorbent bed 12 has a mass of 100 milligrams.

The valves 14, 26, 38 are configures as six-port switching valves 14, 26, 38. Furthermore, the carrier gas source 16 is connected to the respective valve arrangements 14, 26, 38 by means of valves 46, 48, 50.

The operation of the sampling device 2 according to Fig. 1 is as follows: An air sample A is sucked by the transportation device 28 along the upstream stage sorbent bed 24. The upstream stage sorbent bed 24 collects the sample onto the upstream stage sorbent bed 24. Thereafter, the upstream stage valve arrangement 26 is operated so that the carrier gas source 16 is connected to the upstream stage sorbent bed 24 and to the intermediate stage sorbent bed 36. The upstream stage sorbent bed 24 is thermally desorbed to form an upstream desorbed sample and is provided to the intermediate stage sorbent bed 36. This is achieved by means of carrier gas provided by the carrier gas source 16. The sample is then collected onto the intermediate stage sorbent bed 36. The intermediate stage valve arrangement 38 is operated to connect the carrier gas source 16 to the intermediate stage sorbent bed 36 and the downstream stage sorbent bed 12. This might also involve operating the downstream stage valve arrangement 14 to achieve the desired configuration. Thereafter, the intermediate stage sorbent bed 36 is thermally desorbed to form an intermediate desorbed sample and the intermediate desorbed sample is provided by means of carrier gas provided by the carrier gas source 16 to the downstream stage sorbent bed 12. The desorbed sample is collected onto the downstream stage sorbent bed 12. Afterwards, the downstream stage valve arrangement 14 is operated to connect the carrier gas source 16 to the downstream stage sorbent bed 12 and the chromatographic column 102 as well as the detector 104. The downstream stage sorbent bed 12 is thermally desorbed to form a desorbed sample which is provided by means of the carrier gas provided by the carrier gas source 16 to the chromatographic column 102 and the detector 104.

For example, an air sample A of 1 m³ of ambient air with a targeted trace compound concentration of 1 part per million per volume is collected onto the upstream stage sorbent bed 24. The upstream stage sorbent bed 24 is also called a high-volume sorbent bed. The sample may then be thermally desorbed, as explained, from the upstream sorbent bed 24 to the intermediate stage sorbent bed 36 using for example 1 liter of carrier gas which effectively increases the concentration of the trace compounds by a factor of about 1000 to 1 part per billion per volume. This step is then repeated once more for the intermediate stage sorbent bed 36, after which the downstream bed sorbent bed 12 receives a sample of about 1 milliliter with a concentration of 1 part per million by volume. The sample is then injected into the chromatographic column 102, where the compounds are separated and detected by the detector 104. With the invention, low concentrations of trace components can be detected. Further, high retention of volatile compounds is achieved as well as limited sampling time. Further, a high temporal resolution is achieved with sharp peaks in the chromatogram. In the embodiment of Fig. 1, three stages are shown. It is possible, however, to extend the system 100 to more than three stages.

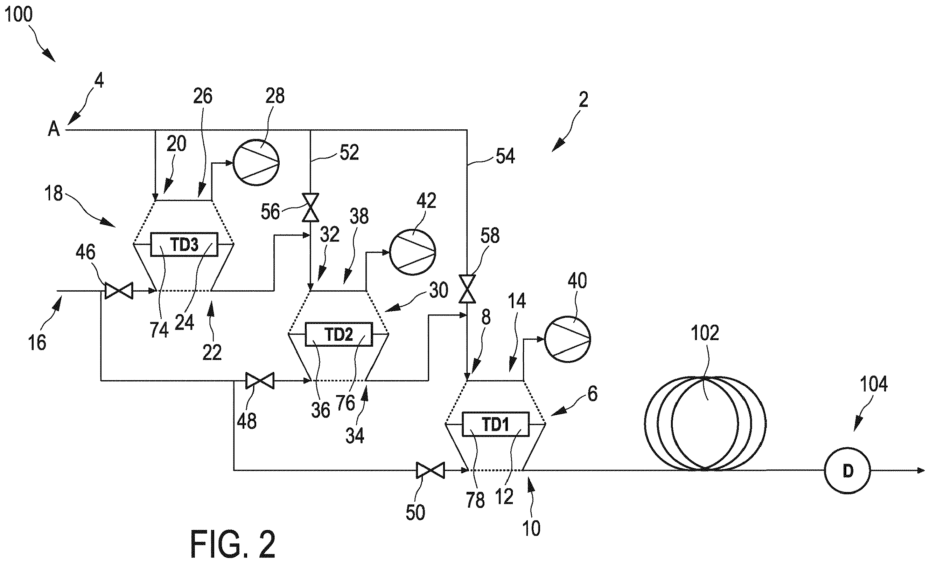

Fig. 2 shows an alternative embodiment of a gas chromatography system 100 for analyzing compounds in an air sample A. The system 100 comprises a sampling device 2, a chromatographic column 102 connected to the downstream stage outlet 10 of the sampling device 2 and a detector 104 connected to the chromatographic column 102.

The sampling device 2 comprises an upstream desorption stage 18, an intermediate desorption stage 30 and a downstream desorption stage 6 that are configured similar to the embodiment of Fig. 1. However, also the intermediate desorption stage 30 and the downstream desorption stage 6 are equipped with the transportation devices 40, 42. The transportation device 40 of the downstream desorption stage 6 is connected to the air sample inlet 4 and the downstream stage sorbent bed 12. The transportation device 40 is configured to provide the air sample A from the air sample inlet 4 to the downstream stage sorbent bed 12 by means of a connecting line 52 that also comprises a valve 56. Further, the intermediate desorption stage 30 comprises a transportation device 42 that is connected to the air sample inlet 4 and the intermediate stage sorbent bed 36. The transportation device 42 is also configured to provide the air sample A from the air sample inlet 4 to the intermediate stage sorbent bed 36. This is achieved by means of a connecting line 54 comprising a valve 58. The sampling device 2 as shown in Fig. 2 can be operated as described with respect to the embodiment of Fig. 1. In addition, when the concentration of the trace components is high, there might be no need to use all three desorption stages 6, 18, 38. By fitting all three stages 6, 18, 30 with a separate transportation device 40, 42, which may be configured as a fan or a pump, the air sampling can be initiated at any desired stage. This increases the flexibility in operation and provides a high dynamic range.

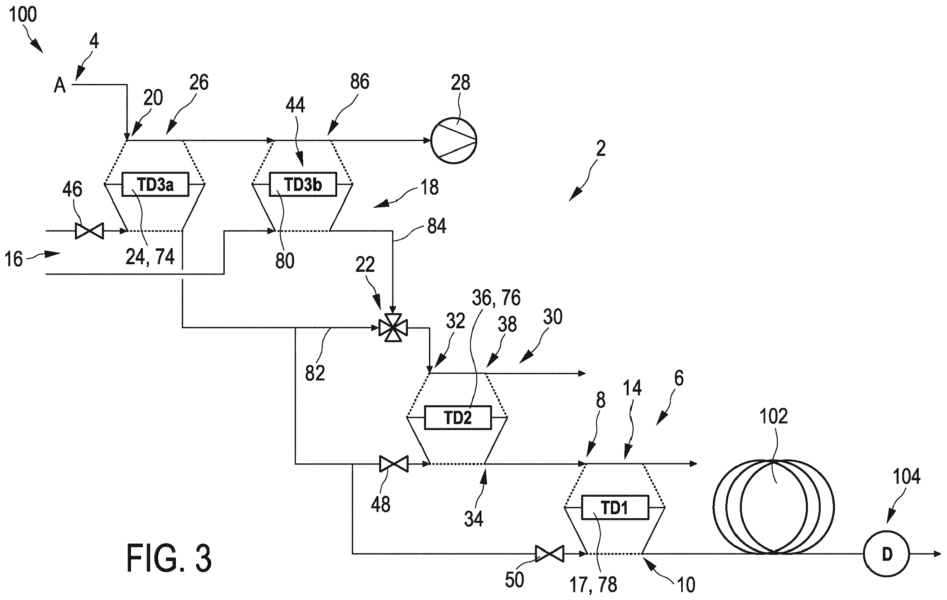

Fig. 3 shows yet another embodiment of a gas chromatography system 100 for analyzing compounds in an air sample A. The system 100 comprises a sampling device 2, a chromatographic column 102 connected to the sampling device 2, and a detector 104 connected to the chromatographic column 102. The sampling device 2 comprises an upstream desorption stage 18, an intermediate desorption stage 30 and a downstream desorption stage 6. The intermediate desorption stage 30 and the downstream desorption stage 6 are similar to the embodiment of Fig. 1. Thus, reference is made to the description of Fig. 1 in this regard. The upstream stage 18 comprises an additional sorbent bed 44.

The additional sorbent bed 44 comprises a sorbent 80 that differs from the sorbent 74 of the upstream sorbent bed 24, in particular with regard to affinities for certain compounds. The sorbent bed 24 and the additional sorbent bed 44 are connected in series. The sorbent beds 24, 44 are thermally decoupled such that they can be desorbed onto a subsequent stage, namely the intermediate stage 30, independently and one after another. Therefore, the air sample inlet 4 is connected to both sorbent beds 24, 44 and also the transportation device 28 is configured to suck an air sample A towards any of the sorbent beds 24, 44. The same applies for the carrier gas source 16. The carrier gas source 16 is configured to provide carrier gas to the upstream stage valve arrangement 26 as well as an additional valve arrangement 86 of the additional sorbent bed 44. By means of connecting lines 82 and 84 both valve arrangements 14, 86 and the respective sorbent beds 24, 44 are connected to a common upstream stage outlet 22.

In particular, when the trace compound in the air sample A has a concentration in the parts per billion or parts per trillion range, it may happen that other compounds are present having a similar or higher concentration. These components may form background noise hindering detection of the trace compounds of interest. Since the air sample A passes through two sorbent beds 24, 44 in series, and since the sorbent beds 24, 44 comprise different sorbents 74, 80, different affinities for a certain compounds are achieved. By thermally decoupling the sorbent beds 24, 44, the sorbent beds 24, 44 can be desorbed onto the intermediate stage sorbent bed 36 independently and one after another. Thus and in summary, the embodiment of Fig. 3 provides the ability to filter out compounds present in the background, based on their relative affinity for the sorbent.

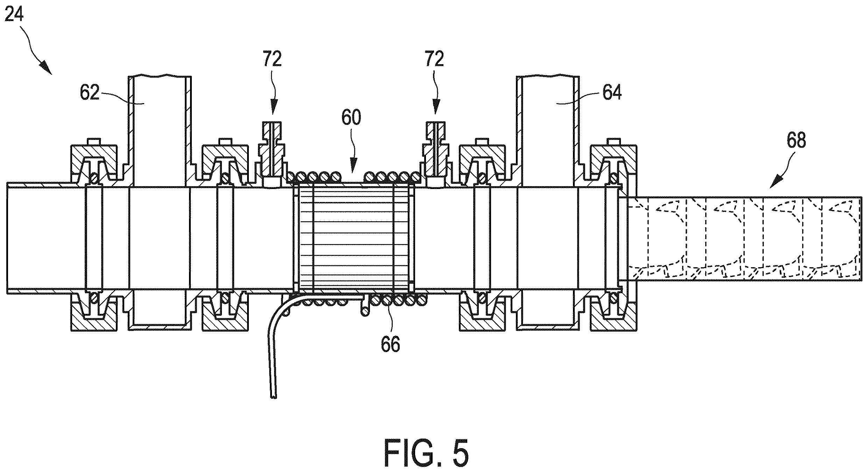

Figs. 4 and 5 show an embodiment of an upstream stage sorbent bed 24 also called a high-volume sorbent bed 24. The upstream stage sorbent bed 24 comprises a stainless steel tube 60 which preferably has a diameter of 30 millimeter - 70 millimeter, in particular 50 millimeter. The stainless steel tube 60 is packed with Poly(2,6-diphenyl-p-phenylene oxide) sorbent material. The upstream stage sorbent bed 24 is opened and closed by means of two valves 62, 64 that are configured, for example, as air-pressure operated valves. The valves can resist temperatures exceeding 150°C and can be baked out in vacuum to clean them of any adsorbed volatiles prior to use. The upstream stage sorbent bed 24 can be heated by means of a heating device 66 which comprises a heating wire that is wound on the outside of the sorbent bed 24. The sorbent bed 24 can be purged with helium via, for example, two Swagelok connectors 72. Furthermore, a fan 68 is attached to the upstream stage sorbent bed 24. The fan 68 is configured to provide a volume flow of at least 0.5 m³ per hour, preferably 1 m³ per hour. Preferably, a series of axial fans 68 is used, as shown in Figs. 4 and 5. As explained, the fans 68 are placed downstream of the upstream stage sorbent bed 24, such that any volatile compounds emitted by the fans 68 do not contaminate the air sample. The sampling rate provided by the fans 68 is factor 100 to 1000 larger than in conventional gas chromatography systems. This allows the capture and detection of low concentrations of volatile compounds in the parts per trillion level.

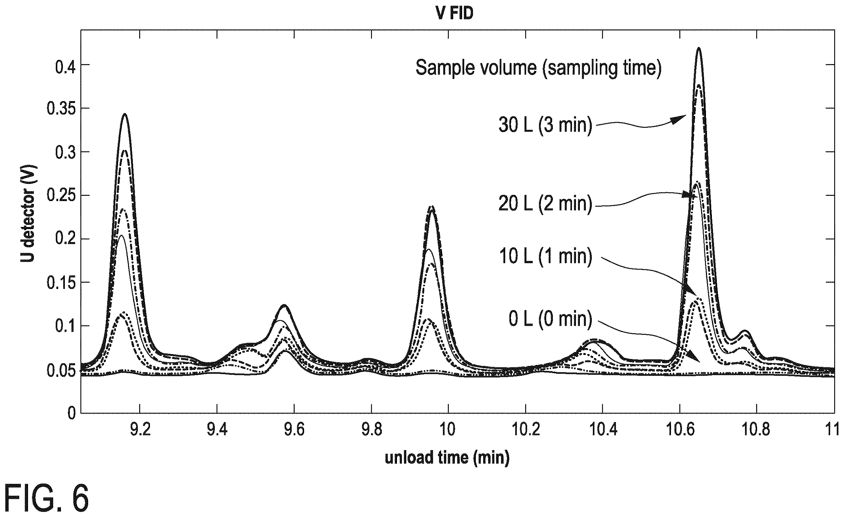

Fig. 6 shows an example chromatogram, for which air samples where collected at a sampling rate of 10 liter per minute for a time duration of 0,1,2 and 3 minutes. This resulted in air sample volumes of 0, 10, 20 and 30 liters collected. As can be seen, the gas chromatogram signal that is shown in Fig. 6 is nearly zero when the air sample volume is zero. When the air sample volume is non-zero, several peaks appear in the chromatogram. These peaks correspond to volatile organic compounds (HOC) that exist in the lab air from the place of sampling. In Fig. 6, only compounds detected between about 9 and 11 minutes of retention time are shown. The diagram of Fig. 6 shows that the proposed device has the ability to collect high volumes of air in a short period of time (10L/min) which is factor 100 to 1000 higher than in conventional gas chromatography systems. Further, it can be obtained from the diagram that the device is capable of analyzing real-world trace compounds which exist in ordinary ambient air in the present example.

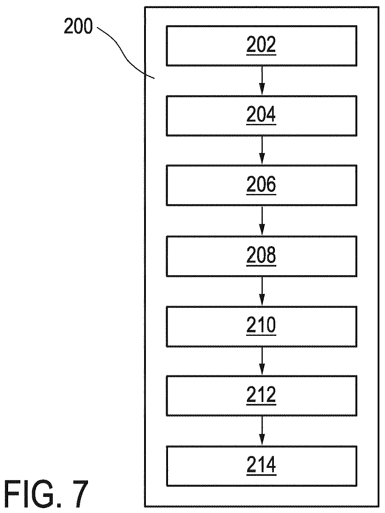

Fig. 7 shows by example a diagram of a method 200 for sampling and concentrating trace compounds in an air sample A, in particular by means of a sampling device 2 according to any of claims 1 to 14. The method 200 comprises providing 202 an air sample A comprising trace compounds to an upstream stage sorbent bed 24, collecting 204 the sample onto the upstream stage sorbent bed 24, thermally desorbing 206 the upstream stage sorbent bed 24 to form a desorbed sample and providing the desorbed sample to the intermediate stage sorbent bed 36, collecting 208 the sample onto the intermediate stage sorbent bed 36, thermally desorbing 210 the intermediate stage sorbent bed 36 to form an intermediate desorbed sample and providing the intermediate desorbed sample to the downstream stage sorbent bed 12, collecting 212 the desorbed sample onto the downstream stage sorbent bed 12, thermally desorbing 214 the downstream stage sorbent bed 12 to form a second desorbed sample. The second desorbed sample is then preferably provided to the chromatographic column 102 and thereafter to the detector 104.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

The invention relates to a sampling device for sampling and concentrating trace compounds from an air sample and a respective gas chromatography system and method. The sampling device comprises a downstream desorption stage as well as at least one additional desorption stage. It has been found that the detection limit of a gas chromatography system can be increased by sampling high volumes of air and concentrating the air sample obtained in a stepwise approach by utilizing the desorption stages to a concentration that exceeds the detection limit of the gas chromatography system. Thus, detection of lower concentrations of compounds in an air sample can be achieved.

## Claims

1. Sampling device (2) for sampling and concentrating trace compounds from an air sample (A), the device (2) comprising:
- an air sample inlet (4) for receiving an air sample (A) comprising trace compounds,
- a downstream desorption stage (6) comprising a downstream stage inlet (8), a downstream stage outlet (10), a downstream stage sorbent bed (12) and a downstream stage valve arrangement (14), wherein the downstream stage valve arrangement (14) is configured to alternatively connect the downstream stage sorbent bed (12) to the downstream stage inlet (8) or to the downstream stage outlet (10) and a carrier gas source (16),
- an upstream desorption stage (18) comprising an upstream stage inlet (20), an upstream stage outlet (22), an upstream stage sorbent bed (24) and an upstream stage valve arrangement (26), wherein the upstream stage valve arrangement (26) is configured to alternatively connect the upstream stage sorbent bed (24) to the upstream stage inlet (20) or to the upstream stage outlet (22) and a carrier gas source (16),
wherein the upstream stage inlet (20) is connected to the air sample inlet (4) and the upstream stage outlet (22) is connected to the downstream stage inlet (8).

2. The sampling device (2) as defined by claim 1, wherein the upstream desorption stage (18) comprises a transportation device (28) configured to provide the air sample (A) from the air sample inlet (4) to the upstream stage sorbent bed (24).

3. The sampling device (2) as defined by any of the preceding claims,
wherein the sampling device (2) further comprises at least one intermediate desorption stage (30) comprising an intermediate stage inlet (32), an intermediate stage outlet (34), an intermediate stage sorbent bed (36) and an intermediate stage valve arrangement (38), wherein the intermediate stage valve arrangement (38) is configured to alternatively connect the intermediate stage sorbent bed (36) to the intermediate stage inlet (32) or to the intermediate stage outlet (34) and the carrier gas source (16),
wherein the intermediate stage (30) is arranged in between the upstream stage (18) and the downstream stage (6), wherein the intermediate stage inlet (32) is connected to the upstream stage outlet (22) and the intermediate stage outlet (34) is connected to the downstream stage inlet (8).

4. The sampling device (2) as defined by as defined by claim 3, wherein the upstream stage sorbent bed (24) comprises a sorbent (74) having a mass of 50 grams - 150 grams, in particular 100 grams, and/or
wherein the intermediate stage sorbent bed (36) comprises a sorbent (76) having a mass of 0.5 grams - 1.5 grams, in particular 1 gram, and/or
wherein the downstream stage sorbent bed (12) comprises a sorbent (78) having a mass of 50 milligrams - 150 milligrams, in particular 100 milligrams.

5. The sampling device (2) as defined by any of the preceding claims, wherein at least one of the valves (14, 26, 38), in particular all valves (14, 26, 38), are configured as six-port switching valves (14, 26, 38).

6. The sampling device (2) as defined by any of the preceding claims, wherein the downstream desorption stage (6) comprises a transportation device (40) connected to the air sample inlet (4) and the downstream stage sorbent bed (12), wherein the transportation device (40) is configured to provide the air sample (A) from the air sample inlet (4) to the downstream stage sorbent bed (12).

7. The sampling device (2) as defined by any of claims 3-6, wherein the intermediate desorption stage (30) comprises a transportation device (42) connected to the air sample inlet (4) and the intermediate stage sorbent bed (36), wherein the transportation device (42) is configured to provide the air sample (A) from the air sample inlet (4) to the intermediate stage sorbent bed (36).

8. The sampling device (2) as defined by any of the preceding claims, wherein at least one of the stages (6, 18, 30) comprises an additional sorbent bed (44), wherein the additional sorbent bed (44) comprises a sorbent (80) that differs from the sorbent (74) of the sorbent bed (24) of the stage (6, 18, 30), in particular with regard to affinities for certain compounds.

9. The sampling device (2) as defined by claim 8, wherein the upstream desorption stage (18) comprises the additional sorbent bed (44).

10. The sampling device (2) as defined by claim 8 or 9, wherein the sorbent bed (24) of the respective stage (6, 18, 30) and the additional sorbent bed (44) are connected in series.

11. The sampling device (2) as defined by any of the preceding claims, wherein the upstream stage sorbent bed (24) comprises at least one of the following:
- stainless steel tube (60),
- Poly(2,6-diphenyl-p-phenylene oxide) sorbent material,
- two valves (62, 64) configured to open and close an access to the upstream stage sorbent bed (24),
- heating device (66), in particular heating wire wound on the outside of the upstream stage sorbent bed (24).

12. The sampling device (2) as defined by any of the preceding claims, wherein at least one of the transportation devices (28, 40, 42) is arranged downstream of the sorbent bed (12, 24, 36) of the respective stage (6, 18, 30).

13. Gas chromatography system (100) for analyzing compounds in an air sample (A), the system (100) comprising:
- a sampling device (2) as defined by any of the preceding claims,
- a chromatographic column (102) connected to the downstream stage outlet (10) of the sampling device (2), and
- a detector (104) connected to the chromatographic column (102).

14. Method (200) for sampling and concentrating trace compounds in an air sample (A), in particular by means of a sampling device (2) of any of claims 1 to 12, the method (200) comprising:
- providing (202) an air sample (A) comprising trace compounds to an upstream stage sorbent bed (24),
- collecting (204) the sample onto the upstream stage sorbent bed (24),
- thermally desorbing (206) the upstream stage sorbent bed (24) to form a desorbed sample and providing the desorbed sample to a downstream stage sorbent bed (12),
- collecting (212) the desorbed sample onto the downstream stage sorbent bed (12),
- thermally desorbing (214) the downstream stage sorbent bed (12) to form a second desorbed sample.

15. The method (200) as defined by claim 14, wherein the desorbed sample from the upstream stage sorbent bed (24) is provided to at least one intermediate stage sorbent bed (36), the method (200) comprising:
- collecting (208) the sample onto the intermediate stage sorbent bed (36),
- thermally desorbing (210) the intermediate stage sorbent bed (36) to form an intermediate desorbed sample and providing the intermediate desorbed sample to the downstream stage sorbent bed (12).
